# FASCICULE DE BREVET EUROPEEN

(11) **EP 3 516 268 B1**
(45) Date de publication et mention de la délivrance du brevet: **05.08.2020**
(21) Numéro de dépôt: 17740057.9
(22) Date de dépôt: 22.06.2017
(51) Int. Cl.: F16H 57/04

(54) **DEFLECTEUR DE GUIDAGE DE LUBRIFIANT POUR L'ALIMENTATION D'UN ARBRE CREUX DE BOITE DE VITESSES**
DEFLEKTOR ZUR LENKUNG EINES SCHMIERMITTELS ZUR VERSORGUNG EINER HOHLWELLE EINES GETRIEBES
DEFLECTOR FOR GUIDING LUBRICANT TO SUPPLY A HOLLOW SHAFT OF A GEARBOX

(30) Priorité: 26.09.2016 FR 1659000
(43) Date de publication de la demande: 31.07.2019
(73) Titulaire: RENAULT s.a.s., 92100 Boulogne-Billancourt (FR)
(72) Inventeur: CHABERT, Virginie, 91410 Authon La Plaine (FR); VILLIERS, Flavien, 91700 Villiers Sur Orge (FR); MAUDET, Frédéric, 91330 Yerres (FR); MERCAY, Patrice, 78180 Montigny-Le-Bretonneux (FR)
(86) Numéro de dépôt international: PCT/FR2017/051670
(87) Numéro de publication internationale: WO 2018/055245

(56) Documents cités:
- CN-U- 201 818 771
- FR-A1- 2 879 709
- JP-U- S57 137 861

## Description

La présente invention se rapporte à la lubrification d'une boîte de vitesses, et plus précisément la lubrification d'un arbre creux de boîte de vitesses, par un flux d'huile circulant à l'intérieur de celui-ci.

Elle concerne plus particulièrement un dispositif de guidage d'huile jusqu'à l'intérieur d'un arbre creux de boîte de vitesses, appelé déflecteur, destiné à coiffer au moins partiellement l'une des extrémités de l'arbre creux ou un palier de roulement situé à l'une des extrémités de l'arbre creux.

Avec un tel dispositif, la lubrification interne d'un empilage de boîte de vitesses se fait en déversant de l'huile par une canule à l'entrée du perçage axial de l'arbre. Cette huile rentre dans la canule après s'être accumulée dans une réserve d'huile s'établissant entre le bout de l'arbre et la partie ouverte du déflecteur.

Une disposition connue est illustrée par le document FR 3 001 019. L'agencement décrit dans ce document comprend un premier déflecteur associé à un premier train d'engrenage, un second déflecteur associé à un second train d'engrenage et des moyens pour guider, par gravité, le lubrifiant vers le premier déflecteur. Ce déflecteur est capable de déborder vers le second déflecteur pour l'alimenter en lubrifiant au moyen d'un conduit dans lequel le lubrifiant s'écoule par gravité.

Dans une telle disposition, l'écoulement du lubrifiant doit se faire depuis une entrée située au-dessus de l'axe de l'arbre du train d'engrenage.

On connaît, du document CN 201818771, un autre dispositif de lubrification d'une boîte de vitesses. Ce document illustre un roulement ayant une forme adaptée pour permettre la lubrification du palier de roulement sous-jacent. Il ne divulgue pas, en revanche, de déflecteur pour alimenter en lubrifiant un arbre creux.

Le document FR 2 879 709, qui divulgue le préambule de la revendication 1, décrit un déflecteur classique, à encombrement réduit en ce qu'il repose sur le fond du carter. La distribution de l'huile dans la boîte de vitesses y est réalisée à l'aide d'une goulotte de collecte et de distribution du lubrifiant située dans la partie supérieure de la boîte de vitesses. Cette goulotte collecte les projections de lubrifiant issues des pignons de la boîte, et guide le lubrifiant ainsi recueilli par gravité vers le déflecteur situé dans l'axe de l'arbre creux supportant les pignons fous à lubrifier.

Le lubrifiant pénètre dans l'arbre creux à l'aide d'une canule rentrant dans l'arbre creux et collectant le ruissèlement du lubrifiant le long des aspérités du déflecteur. Ce document ne divulgue pas d'agencement dans lequel l'entrée du lubrifiant est en dessous de l'axe de l'arbre creux dans lequel le lubrifiant est destiné à être conduit.

La présente invention vise à améliorer les systèmes existants en proposant un déflecteur comprenant des formes et des sections qui, combinées avec l'entraînement du lubrifiant par l'arbre creux en rotation, permettent de guider le lubrifiant depuis une goulotte d'acheminement du lubrifiant vers l'intérieur d'un arbre creux.

L'invention a ainsi pour objet un déflecteur de guidage de lubrifiant pour alimenter un arbre creux, comprenant un arc de disque et une canule tubulaire d'introduction de lubrifiant destinée à être engagée à l'intérieur de l'arbre creux. L'arc de disque comprend sur l'une de ses faces, au moins une cavité destinée à être coiffée au moins partiellement par l'extrémité de l'arbre, ladite au moins une cavité étant adaptée pour collecter le flux de lubrifiant provenant d'une goulotte d'acheminement du lubrifiant et dont les contours guident le flux de lubrifiant vers la canule tubulaire.

Selon l'invention, au moins une cavité est délimitée par une paroi latérale, perpendiculaire au plan de l'arc de disque, le long d'une partie du bord de l'arc de disque.

Selon l'invention, le déflecteur comprend une couronne s'étendant radialement depuis ladite au moins une cavité

Selon l'invention, la couronne est séparée de la paroi latérale par un goulet pour que ladite au moins une cavité puisse être en communication fluidique avec une goulotte d'acheminement du lubrifiant.

Selon un mode de réalisation, l'arbre creux est en rotation autour d'un axe horizontal.

Selon un autre mode de réalisation, la goulotte d'acheminement du lubrifiant est située sous un plan horizontal comprenant l'axe de l'arbre creux.

Selon un autre mode de réalisation, la canule tubulaire d'introduction de lubrifiant s'étend coaxialement à l'arbre creux vers l'intérieur de l'arbre creux.

Selon une autre caractéristique de l'invention, le déflecteur comprend des moyens de fixation au déflecteur par rapport à un carter de boîte de vitesses, ledit carter étant destiné, en outre, à supporter l'arbre creux à au moins une de ses extrémités par un palier.

Selon une autre caractéristique de l'invention, le déflecteur comprend en outre un téton d'indexage adapté pour s'insérer dans une encoche pratiquée dans le palier du carter.

Selon un autre mode de réalisation, un premier et un second flanc de l'arc de disque forment un V orienté en vis-à-vis d'une gorge pratiquée dans le palier du carter pour permettre l'échappement vertical de l'air présent dans la cavité.

Selon une autre caractéristique de l'invention, le déflecteur comprend en outre un ou plusieurs racleurs localisés partiellement le long du premier ou du second flanc.

Selon une autre caractéristique de l'invention, la canule tubulaire comprend une ouverture pratiquée dans le prolongement longitudinal des flancs sur au moins une partie de sa longueur.

D'autres caractéristiques et avantages de l'invention apparaîtront à la lecture d'un mode de réalisation non limitatif de celle-ci, en se reportant aux dessins annexés sur lesquels :
- La figure 1 est une vue en coupe d'une boîte de vitesses de l'art antérieur ;
- La figure 2 est une représentation en perspective du déflecteur selon l'invention ;
- La figure 3 est une vue en coupe transversale d'une boîte de vitesses comprenant le déflecteur mal orienté et qui n'alimente pas correctement la ligne d'arbre ;
- La figure 4 est vue en coupe transversale d'une boîte de vitesses comprenant un déflecteur maintenu immobile dans une position favorisant l'écoulement du lubrifiant selon l'invention ; et
- La figure 5 est une vue en coupe longitudinale d'une partie de la boîte de vitesse centrée sur l'extrémité de l'arbre à lubrifier au moyen du déflecteur selon l'invention.

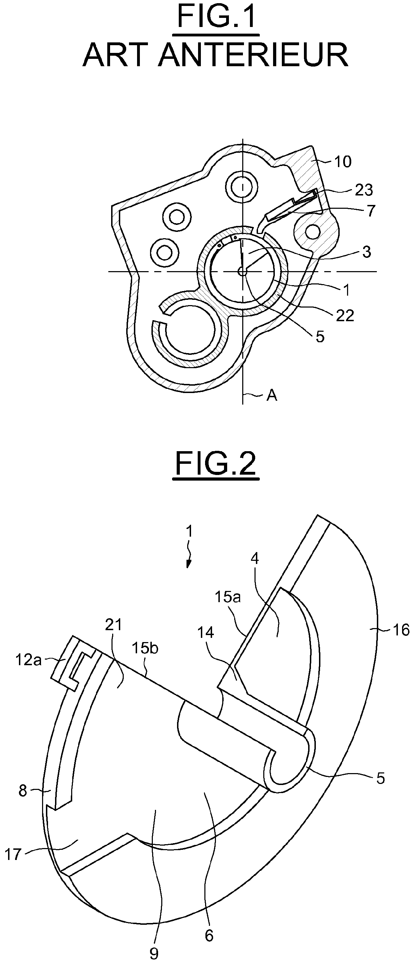

Sur la figure 1, on a représenté une boîte de vitesses comprenant un carter 10 dans lequel sont introduits un déflecteur 1 et un arbre creux 3.

Le déflecteur 1 comprend une partie en forme d'arc de disque 4, ouvert en forme de V dont le sommet rejoint une canule tubulaire 5 qui pénètre dans le perçage axial 20 de l'arbre creux 3.

La lubrification interne d'un empilage de pignons d'une boîte de vitesses peut en effet s'effectuer en collectant du lubrifiant 2 projeté par des pignons de la boîte dans un réceptacle 23 en communication fluidique avec une goulotte 7 adaptée pour déverser le lubrifiant entre le déflecteur 1 et une extrémité de l'arbre creux 3, avant d'être introduit dans le perçage axial 20 de l'arbre creux 3 par une canule tubulaire 5 engagée dans l'entrée de ce perçage 20. Le lubrifiant 2 entre alors dans la canule tubulaire 5 par gravité ou glisse jusqu'à la canule tubulaire 5 après avoir été projeté contre des racleurs 14.

On se réfèrera à la figure 2 qui illustre un déflecteur 1 raccordé solidairement à une canule tubulaire 5 d'introduction de lubrifiant 2 dans un arbre creux 3 de boîte de vitesses. Une des faces de l'arc de disque 4, désignée par la référence 9, est façonnée de manière à former une cavité 6 pour collecter le flux de lubrifiant 2 et dont les contours forment des obstacles pour guider le lubrifiant 2 en mouvement vers la canule tubulaire 5. Ces contours comprennent une paroi latérale 8 de l'arc de disque 4 courant le long du bord extérieur réalisant ainsi un rebord partiel de la face de l'arc de disque 4, et une couronne 16 s'étendant radialement depuis la cavité 6 vers l'extérieur de l'arc de disque 4 le long du bord extérieur de cette face 9.

La paroi latérale 8 et la couronne 16 sont séparées par un goulet 17 s'étendant depuis la cavité 6 jusqu'au bord extérieur de l'arc de disque 4. Elles sont destinées à être coiffées par l'extrémité de l'arbre creux 3, par une vis creuse 18 à l'extrémité de l'arbre creux 3, ou par un palier à roulement 19 supportant l'arbre creux 3.

Lorsque la cavité 6 est ceinte par la paroi latérale 8 et la couronne 16 d'une part, et par l'extrémité de l'arbre creux 3 d'autre part, le goulet 17 assure une communication fluidique avec la goulotte 7.

La canule tubulaire 5 est placée au centre du déflecteur 1, et est destinée à être introduite dans le perçage axial 20 de l'arbre creux 3. Une ouverture est pratiquée sur toute la longueur de la canule tubulaire 5 dans le prolongement des flancs 15a et 15b en V de l'arc de disque 4, en l'occurrence, dans la partie supérieure de la canule tubulaire 5.

Dans un autre mode de réalisation, la surface 21 au fond de la cavité 6 est réglable en hauteur pour modifier sa proximité avec les pièces tournantes, telles que l'arbre creux 3 ou le palier à roulement 19 en vis-à-vis, pour optimiser la quantité de lubrifiant 2 admise dans la cavité 6, et contrôler le débit dans le V.

Le déflecteur 1 de la figure 2 comprend en outre un téton 12a d'indexage pour assurer, lors du montage, une orientation et une position correcte du déflecteur 1. Ce téton 12a est adapté pour coopérer avec une encoche 12b réalisée dans le logement du déflecteur dans le carter 10.

On ne peut ainsi obtenir qu'une seule et unique possibilité de montage et donc d'orientation du déflecteur 1 dans le carter 10.

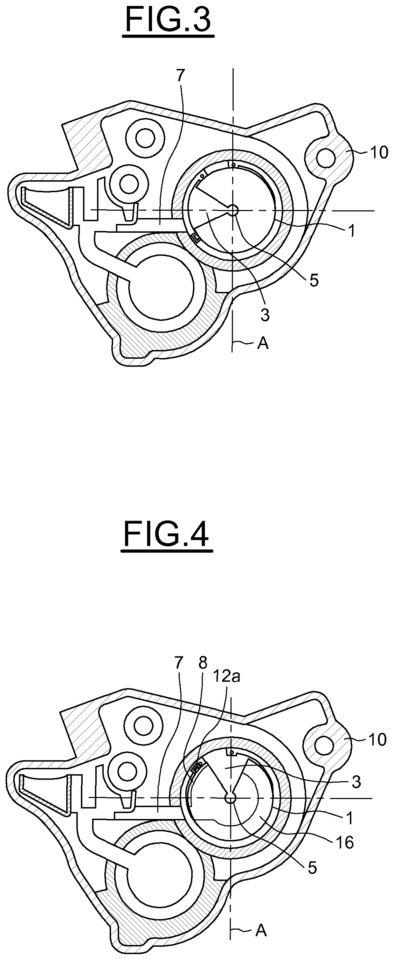

En référence à la figure 3 qui illustre un montage particulier du déflecteur 1, la goulotte d'acheminement 7 du lubrifiant 2 est située sous un axe A de l'arbre creux 3. La disposition du V en vis-à-vis de la goulotte d'acheminement 7 du lubrifiant n'est pas limitative. En effet, une mauvaise orientation du déflecteur 1 peut créer une zone de brassage du lubrifiant, et conduire à une obturation partielle du parcours du flux de lubrifiant 2.

Conformément à la figure 4, le V du déflecteur 1 est orienté vers le haut.

Une gorge est pratiquée dans le logement du déflecteur dans le carter 10 pour permettre l'échappement vertical de l'air présent dans la cavité 6. Le V du déflecteur 1 peut être orienté en vis-à-vis de cette gorge pour faciliter le dégazage.

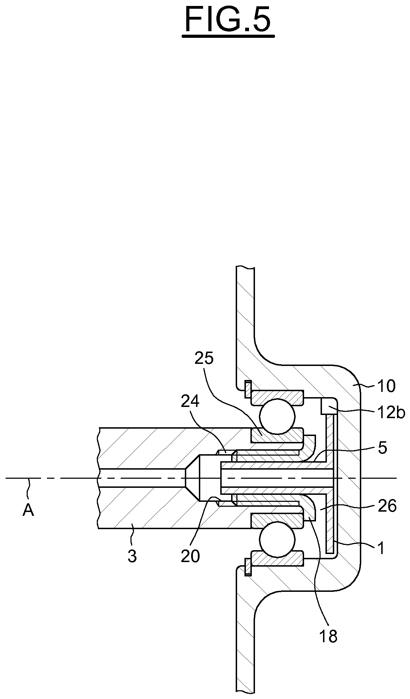

Dans une autre configuration de la boîte de vitesses, représentée en coupe longitudinale sur la figure 5, un arbre creux 3 comprend un filetage 24 dans l'entrée d'un perçage axial 20 pour coopérer avec une vis creuse 18.

L'arbre creux est muni d'un épaulement à une de ses extrémités pour entrer en butée avec une couronne intérieure 25 de palier de roulement 19. Cette couronne intérieure 25 est maintenue dans sa position après vissage de la vis creuse 18.

Comme on le voit sur la figure 5, un déflecteur 1 est inséré dans un logement du carter 10 prévu à cet effet. Un espace 26 peut être aménagé entre le déflecteur 1 et les pièces tournantes telles que la vis creuse 18, l'extrémité de l'arbre creux 3, ou la couronne intérieure 25 du palier de roulement 19.

Une canule tubulaire 5 s'étendant depuis le centre du déflecteur 1 vers l'intérieur de l'arbre creux 3 est adaptée pour introduire le lubrifiant 2 dans l'arbre creux 3.

Un téton d'indexage 12a est ajouté au déflecteur 1 pour s'assurer de la bonne orientation et du respect de l'unique position de celui-ci au montage.

La rotation de l'arbre creux 3 dans le sens horaire entraîne la rotation du lubrifiant 2 dans le même sens par friction. Le lubrifiant 2 ainsi mis en rotation est remonté et projeté contre les racleurs 14, et contre l'extrémité de l'arbre creux 3 découvert par l'ouverture en V du déflecteur 1, matérialisé par un premier flanc 15a et un second flanc 15b. Le lubrifiant 2 ainsi arrêté par les racleurs 14 ruissèle le long des flancs 15a et 15b du V ainsi que le long de l'extrémité de l'arbre creux 3. Ce ruissèlement peut ainsi être réalisé sur toute la hauteur du flanc 15a du V si les pièces en vis-à-vis le permettent.

Le flanc 15b du V en amont, en considérant le sens de rotation de l'arbre creux, permet de récupérer le flux de lubrifiant 2 renvoyé par le racleur 14 par la force de projection du lubrifiant 2.

## Revendications

1. Déflecteur (1) de guidage de lubrifiant (2) pour alimenter un arbre creux (3), comprenant un arc de disque (4) et une canule tubulaire (5) d'introduction de lubrifiant (2) destinée à être engagée à l'intérieur de l'arbre creux (3), l'arc de disque (4) formant sur l'une de ses faces (9) au moins une cavité (6) destinée à être coiffée au moins partiellement par l'extrémité de l'arbre (3) et adaptée pour collecter le flux de lubrifiant (2) provenant d'une goulotte d'acheminement (7) et le guider vers la canule tubulaire (5), **caractérisé en ce que** la cavité (6) est délimitée par une paroi latérale (8) perpendiculaire au plan de l'arc de disque (4) le long d'une partie du bord de l'arc de disque (4), et par une couronne (16) s'étendant radialement depuis la cavité, la couronne étant séparée de la paroi latérale par un goulet (17) adapté pour assurer une communication fluidique entre la cavité (6) et la goulotte (7).

2. Déflecteur (1) de guidage de lubrifiant (2) selon la revendication 1, dans lequel la paroi latérale (8) de l'arc de disque(4) réalise un rebord partiel de la face de l'arc de disque (4).

3. Déflecteur (1) de guidage de lubrifiant selon la revendication 1 ou 2, dans lequel la couronne (16) s'étend radialement vers l'extérieur depuis la cavité (6).

4. Déflecteur (1) de guidage de lubrifiant (2) selon la revendication 1, 2 ou 3, dans lequel la canule tubulaire (5) d'introduction de lubrifiant (2) est adaptée à s'étendre coaxialement à l'arbre creux (3) vers l'intérieur de l'arbre creux (3).

5. Boîte de vitesses comportant un déflecteur (1) de guidage de lubrifiant (2) selon l'une des revendications précédentes, dans laquelle l'arbre creux (3) est en rotation autour d'un axe (A) horizontal.

6. Boîte de vitesses selon la revendication 5, dans laquelle la goulotte (7) d'acheminement du lubrifiant (2) est située sous un plan horizontal comprenant l'axe (A) de l'arbre creux (3).

7. Boîte de vitesses selon la revendication 5 ou 6, comprenant des moyens (12a et 12b) de fixation du déflecteur (1) de guidage de lubrifiant (2) par rapport à un carter (10) de boîte de vitesses, ledit carter (10) étant destiné, en outre, à supporter l'arbre creux (3) à au moins l'une de ses extrémités par un palier (19).

8. Boîte de vitesses selon la revendication 7, dans laquelle le déflecteur (1) de guidage de lubrifiant (2) comprend en outre un téton d'indexage (12a) adapté pour s'insérer dans une encoche (12b) pratiquée dans le palier (19) du carter (20).

9. Boîte de vitesses selon la revendication 7 ou 8, dans laquelle un premier (15a) et un second flanc (15b) de l'arc de disque (4) du déflecteur (1) de guidage de lubrifiant (2) forment un V orienté en vis-à-vis d'une gorge pratiquée dans le palier du carter (10) pour permettre l'échappement vertical de l'air présent dans la cavité (6).

10. Boîte de vitesses selon la revendication 9, dans laquelle le déflecteur (1) de guidage de lubrifiant (2) comprend en outre un ou plusieurs racleurs (14) localisés partiellement le long du premier (15a) ou du second flanc (15b).

11. Boîte de vitesses selon les revendications 9 ou 10, dans laquelle la canule tubulaire (5) du déflecteur (1) de guidage de lubrifiant (2) comprend une ouverture (17) pratiquée dans le prolongement longitudinal des flancs (15a et 15b) sur au moins une partie de sa longueur.

## Patentansprüche

1. Deflektor (1) zur Führung von Schmiermittel (2), um eine Hohlwelle (3) zu versorgen, welcher einen Scheibenbogen (4) und eine rohrförmige Hohlnadel (5) zur Einleitung von Schmiermittel (2), die dazu bestimmt ist, ins Innere der Hohlwelle (3) eingeführt zu werden, umfasst, wobei der Scheibenbogen (4) auf einer seiner Seiten (9) wenigstens eine Vertiefung (6) bildet, die dazu bestimmt ist, wenigstens teilweise vom Ende der Welle (3) bedeckt zu werden, und dafür ausgelegt ist, den von einer Zuführungsrinne (7) kommenden Strom von Schmiermittel (2) zu sammeln und ihn zu der rohrförmigen Hohlnadel (5) zu leiten, **dadurch gekennzeichnet, dass** die Vertiefung (6) von einer zur Ebene des Scheibenbogens (4) senkrechten Seitenwand (8) entlang eines Teils des Randes des Scheibenbogens (4) und von einem Kranz (16), der sich von der Vertiefung aus radial erstreckt, begrenzt wird, wobei der Kranz von der Seitenwand durch eine Engstelle (17) getrennt ist, die dafür ausgelegt ist, eine Fluidverbindung zwischen der Vertiefung (6) und der Rinne (7) sicherzustellen.

2. Deflektor (1) zur Führung von Schmiermittel (2) nach Anspruch 1, wobei die Seitenwand (8) des Scheibenbogens (4) einen teilweise ausgebildeten Flansch der Seite des Scheibenbogens (4) bildet.

3. Deflektor (1) zur Führung von Schmiermittel nach Anspruch 1 oder 2, wobei sich der Kranz (16) von der Vertiefung (6) aus radial nach außen erstreckt.

4. Deflektor (1) zur Führung von Schmiermittel (2) nach Anspruch 1, 2 oder 3, wobei die rohrförmige Hohlnadel (5) zur Einleitung von Schmiermittel (2) dafür ausgelegt ist, sich koaxial mit der Hohlwelle (3) zum Inneren der Hohlwelle (3) zu erstrecken.

5. Getriebe, welches einen Deflektor (1) zur Führung von Schmiermittel (2) nach einem der vorhergehenden Ansprüche aufweist, wobei sich die Hohlwelle (3) um eine horizontale Achse (A) dreht.

6. Getriebe nach Anspruch 5, wobei sich die Rinne (7) zur Zuführung des Schmiermittels (2) unter einer horizontalen Ebene befindet, welche die Achse (A) der Hohlwelle (3) umfasst.

7. Getriebe nach Anspruch 5 oder 6, welches Mittel (12a und 12b) zur Befestigung des Deflektors (1) zur Führung von Schmiermittel (2) in Bezug auf ein Getriebegehäuse (10) umfasst, wobei das Gehäuse (10) außerdem dazu bestimmt ist, die Hohlwelle (3) an wenigstens einem ihrer Enden durch ein Lager (19) zu stützen.

8. Getriebe nach Anspruch 7, wobei der Deflektor (1) zur Führung von Schmiermittel (2) außerdem einen Indexieransatz (12a) umfasst, der dafür ausgelegt ist, in eine Raste (12b) eingesetzt zu werden, die in dem Lager (19) des Gehäuses (20) ausgebildet ist.

9. Getriebe nach Anspruch 7 oder 8, wobei eine erste (15a) und eine zweite Flanke (15b) des Scheibenbogens (4) des Deflektors (1) zur Führung von Schmiermittel (2) ein "V" bilden, das gegenüber einer im Lager des Gehäuses (10) ausgebildeten Auskehlung angeordnet ist, um das vertikale Entweichen der in der Vertiefung (6) vorhandenen Luft zu ermöglichen.

10. Getriebe nach Anspruch 9, wobei der Deflektor (1) zur Führung von Schmiermittel (2) außerdem einen oder mehrere Abstreifer (14) umfasst, die teilweise entlang der ersten (15a) oder der zweiten Flanke (15b) angeordnet sind.

11. Getriebe nach Anspruch 9 oder 10, wobei die rohrförmige Hohlnadel (5) des Deflektors (1) zur Führung von Schmiermittel (2) eine Öffnung (17) umfasst, die auf wenigstens einem Teil ihrer Länge in der Verlängerung der Flanken (15a und 15b) in Längsrichtung ausgebildet ist.

## Claims

1. Deflector (1) for guiding lubricant (2) to supply a hollow shaft (3), comprising a disc arc (4) and a tubular nozzle (5) for introducing the lubricant (2), which nozzle is intended to be engaged inside the hollow shaft (3), the disc arc (4) forming on one of its faces (9) at least one cavity (6) intended to be capped, at least in part, by the end of the shaft (3) and designed to collect the flow of lubricant (2) coming from a guide chute (7) and guide it towards the tubular nozzle (5), **characterized in that** the cavity (6) is delimited by a lateral wall (8) perpendicular to the plane of the disc arc (4) along part of the edge of the disc arc (4), and by a collar (16) extending radially from the cavity, the collar being separated from the lateral wall by a gap (17) that is designed to provide fluidic communication between the cavity (6) and the chute (7).

2. Deflector (1) for guiding lubricant (2) according to Claim 1, in which the lateral wall (8) of the disc arc (4) forms a partial rim of the face of the disc arc (4).

3. Deflector (1) for guiding lubricant according to Claim 1 or 2, in which the collar (16) extends radially outwards from the cavity (6).

4. Deflector (1) for guiding lubricant (2) according to Claim 1, 2 or 3, in which the tubular nozzle (5) for introducing the lubricant (2) is designed to extend coaxially with respect to the hollow shaft (3) towards the inside of the hollow shaft (3).

5. Gearbox comprising a deflector (1) for guiding lubricant (2) according to any one of the preceding claims, in which the hollow shaft (3) is in rotation about a horizontal axis (A).

6. Gearbox according to Claim 5, in which the chute (7) for guiding the lubricant (2) is situated below a horizontal plane containing the axis (A) of the hollow shaft (3).

7. Gearbox according to Claim 5 or 6, comprising means (12a and 12b) for attaching the deflector (1) for guiding lubricant (2) with respect to a gearbox casing (10), said casing (10) also being intended to support the hollow shaft (3) at least at one of its ends via a bearing (19).

8. Gearbox according to Claim 7, in which the deflector (1) for guiding lubricant (2) further comprises an indexing stud (12a) designed to be inserted in a slot (12b) made in the bearing (19) of the casing (20).

9. Gearbox according to Claim 7 or 8, in which a first (15a) and a second (15b) flank of the disc arc (4) of the deflector (1) for guiding lubricant (2) form a V oriented to face a groove made in the bearing of the casing (10) so as to allow air present in the cavity (6) to escape vertically.

10. Gearbox according to Claim 9, in which the deflector (1) for guiding lubricant (2) further comprising one or a plurality of scrapers (14) partially located along the first (15a) or second (15b) flank.

11. Gearbox according to Claims 9 or 10, in which the tubular nozzle (5) of the deflector (1) for guiding lubricant (2) comprises an opening (17) made in the longitudinal continuation of the flanks (15a and 15b) over at least part of the length thereof.
